(19) Europäisches Patentamt
European Patent Office
Office européen des brevets

(11) **EP 2 449 009 B1**

(12) **EUROPEAN PATENT SPECIFICATION**

(45) Date of publication and mention
of the grant of the patent:
**26.08.2015 Bulletin 2015/35**

(51) Int Cl.:
***C08J 5/18*** *(2006.01)*     ***C08K 7/16*** *(2006.01)*
***C08L 67/00*** *(2006.01)*     ***B32B 27/36*** *(2006.01)*

(21) Application number: **10794354.0**

(86) International application number:
**PCT/KR2010/004238**

(22) Date of filing: **30.06.2010**

(87) International publication number:
**WO 2011/002219 (06.01.2011 Gazette 2011/01)**

(54) **THERMO-SHRINKABLE POLYESTER FILM**

WÄRMESCHRUMPFENDE POLYESTERFOLIE

FILM POLYESTER THERMORÉTRACTABLE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **30.06.2009 KR 20090059435**

(43) Date of publication of application:
**09.05.2012 Bulletin 2012/19**

(73) Proprietor: **KOLON INDUSTRIES, INC.**
**Gwacheon-si**
**Gyeonggi-do 427-709 (KR)**

(72) Inventors:
• **KIM, Yun Jo**
**Gumi-si**
**Gyeongsangbuk-do 730-764 (KR)**
• **SONG, Gi Sang**
**Gumi-si**
**Gyeongsangbuk-do 730-819 (KR)**
• **KIM, Dong Jin**
**Gumi-si**
**Gyeongsangbuk-do 730-110 (KR)**
• **KIM, Si Min**
**Daegu 704-786 (KR)**

(74) Representative: **Ter Meer Steinmeister & Partner**
**Patentanwälte mbB**
**Nymphenburger Straße 4**
**80335 München (DE)**

(56) References cited:
EP-A1- 1 489 139     EP-A1- 1 695 818
EP-A1- 2 058 357     EP-A1- 2 058 357
EP-A1- 2 311 903     WO-A1-2008/026530
WO-A1-2008/096668     WO-A1-2009/041408
WO-A1-2009/041408     JP-A- 6 015 732
JP-A- 9 239 833     JP-A- 2000 218 694
JP-A- 2004 175 067     JP-A- 2004 175 067
JP-A- 2008 214 443     JP-A- 2009 102 529

**Description**

**[Technical Field]**

The present invention relates to a thermo-shrinkable polyester film.

**[Background Art]**

A thermo-shrinkable film is used to cover, bind and wrap various containers, such as bottles, cans and the like, and various long products, such as pipes, rods and the like, and is used as a material for wrappings or labels. A typical example of the thermo-shrinkable film is a thermo-shrinkable polyester film.

The thermo-shrinkable film is used for shrink-wrapping, shrink-labeling or cap-sealing various containers, for example, polyethylene terephthalate (PET) vessels, polyethylene (PE) vessels, glass vessels, and the like, because it is shrunk by heat.

In order to manufacture a label or the like, first, a polymer, which is a raw material, is continuously melted and extruded to form an unstretched film. Subsequently, the unstretched film is stretched to form a thermo-shrinkable film roll. Then, the thermo-shrinkable film roll is unrolled, slit in a predetermined width, and then rolled again. Subsequently, the rolled thermo-shrinkable film is printed with product names, characters, drawings and the like. Thereafter, both ends of the printed thermo-shrinkable film are joined to each other to form a tube (tubing process). In this case, the order of slitting and the order of printing may be reversed. Subsequently, the tube is rolled, and then unrolled during subsequent processes, and then cut to a predetermined size, thereby manufacturing a label. The opening formed at one side of this label is covered to manufacture an envelope.

Subsequently, a container is covered with the label or envelope obtained in this way, and then the container covered with the label or envelope passes through a steam tunnel in which thermal contraction is conducted by steam or a hot air tunnel in which thermal contraction is conducted by hot air to thermally contract the label or envelope to closely adhere the label or envelope to the container, thereby obtaining a final product, that is, a labeled container.

Meanwhile, when a label is made of the thermo-shrinkable film, it is required to easily observe the contents (drinkables and the like) charged in a container and to allow the contents to appear fresh.

**[Disclosure]**

**[Technical Problem]**

Accordingly, the present invention has been devised to solve the above-mentioned problems, and the present invention provides a thermo-shrinkable polyester film, the transparency of which is improved such that the contents included in a container are seen as being fresh.

Further, the present invention provides a thermo-shrinkable polyester film which can reduce the defective fraction attributable to lubricity in a film forming process or a post-treatment process.

**[Technical Solution]**

An aspect of the present invention provides a thermo-shrinkable polyester film, including: particles dispersed in a polyester resin matrix, wherein the thermo-shrinkable polyester film has a haze of 1.0% or less; a contraction ratio of the thermo-shrinkable polyester film in a main contraction direction is 35 ~ 80% when it is treated with hot water at 90 °C for 10 seconds; a contraction ratio of the thermo-shrinkable polyester film in a direction perpendicular to the main contraction direction is 5% or less when it is treated with hot water at 90°C for 10 seconds; and the number of protrusions having a size of 200 $\mu$m or larger distributed in a sample having an area of 1 m $\times$ 1 m is 0,
wherein the particles dispersed in the polyester resin matrix have an average particle size of 1 ~ 5 $\mu$m,
wherein the particles are included in an amount of 30- 150 ppm based on the total weight of the polyester resin matrix,
wherein the thermo-shrinkable polyester film comprises an inline coating layer including particles having an average particle size of 80 - 200 nm on a surface layer thereof,
wherein the polyester resin matrix includes at least one selected from copolyesters obtained by polymerizing dicarboxylic acid components including one or more dicarboxylic acids, such as terephthalic acid, oxalic acid, malonic acid, succinic acid, adipic acid, suberic acid, azelaic acid, sebacic acid, phthalic acid, iso-phthalic acid, naphthalene dicarboxylic acid and diphenyl ether dicarboxylic acid, with diol components including one or more diols, such as ethylene glycol, neo-pentyl glycol, propylene glycol, trimethylene glycol, tetramethylene glycol, hexamethylene glycol, diethylene glycol, polyalkylene glycol, 1,4-cyclohexane dimethanol; or a mixture of a homopolyester and the copolyester.

The particles may include at least one selected from calcium carbonate particles, magnesium carbonate particles, barium carbonate particles, barium sulfate particles, lithium phosphate particles, calcium phosphate particles, magnesium phosphate particles, aluminum oxide particles, silicon oxide particles, titanium oxide particles, zirconium oxide particles, kaolin particles, talc particles, lithium fluoride particles, oxalic alkaline earth metal salt particles, alkaline earth metal salt particles, zinc salt particles, manganese salt particles, particles of homopolymers or copolymers of vinyl monomers such as divinylbenzene, styrene, (meth)acrylic acid and the like, polytetrafluoroethylene particles, benzoguanamine resin particles, thermosetting urea resin particles, thermosetting phenol resin particles, silicon resin particles, and crosslinked polystyrene particles. Further, the particles may be included in an amount of 30 ~ 150 ppm base on the total weight of the polyester resin matrix.

Further, the inline coating layer may be formed using a coating solution including 0.01 ~ 0.10 wt% of particles. Further, the inline coating layer may include a binder resin. Further, the inline coating layer may include an antistatic agent.

Further, the copolyester may include 80 mol% or more of terephthalic acid based on the total amount of the dicarboxylic acid components, and 14 ~ 24 mol% of diols excluding ethylene glycol based on the total amount of the diol components. Further, the copolyester may have a glass transition temperature of 67 ~ 77°C and an intrinsic viscosity of 0.60~0.70 dl/g.

Further, the homopolyester may be polybutylene terephthalate or polyethylene terephthalate. Further, the copolyester may be included in an amount of 85 ~ 93 wt% based on the total amount of the polyester resin matrix.


**[Advantageous Effects]**

When the thermo-shrinkable polyester film of the present invention is used as a label or the like for covering a container, the visibility of the contents of a container becomes extremely good, so that the contents can be seen fresh, thereby improving the reliability of consumers to the concerned products.

Further, according to the thermo-shrinkable polyester film of the present invention, its defective fraction attributable to lubricity occurring when it is rolled in a film forming process or a post-treatment process can be reduced, and the blocking between the films can be prevented.


**[Best Mode]**

An embodiment of the present invention provides a thermo-shrinkable polyester film, including: particles dispersed in a polyester resin matrix, wherein the thermo-shrinkable polyester film has a haze of 1.0% or less; a contraction ratio of the thermo-shrinkable polyester film in a main contraction direction is 35 ~ 80% when it is treated with hot water at 90°C for 10 seconds; a contraction ratio of the thermo-shrinkable polyester film in a direction perpendicular to the main contraction direction is 5% or less when it is treated with host water at 90°C for 10 seconds; and the number of protrusions having a size of 200 $\mu$m or larger distributed in a sample having an area of 1 m X 1 m is 0 wherein the particles dispersed in the polyester resin matrix have an average particle size of 1 ~ 5 um,
wherein the particles are included in an amount of 30- 150 ppm based on the total weight of the polyester resin matrix, wherein the thermo-shrinkable polyester film comprises an inline coating layer including particles having an average particle size of 80 - 200 nm on a surface layer thereof,
wherein the polyester resin matrix includes at least one selected from copolyesters obtained by polymerizing dicarboxylic acid components including one or more dicarboxylic acids, such as terephthalic acid, oxalic acid, malonic acid, succinic acid, adipic acid, suberic acid, azelaic acid, sebacic acid, phthalic acid, iso-phthalic acid, naphthalene dicarboxylic acid and diphenyl ether dicarboxylic acid, with diol components including one or more diols, such as ethylene glycol, neo-pentyl glycol, propylene glycol, trimethylene glycol, tetramethylene glycol, hexamethylene glycol, diethylene glycol, polyalkylene glycol, 1,4-cyclohexane dimethanol; or a mixture of a homopolyester and the copolyester.

A thermo-shrinkable film is required to be made in the form of a film roll by transporting or rolling a long film at high speed in terms of the improvement of productivity in the film forming process or the post-treatment process. Therefore, it is required that the thermo-shrinkable film have good lubricity to some degree. When the lubricity of the thermo-shrinkable film is insufficient, the thermo-shrinkable film cannot be easily treated at the time of transporting or rolling the thermo-shrinkable film. Concretely, for example, the thermo-shrinkable film can be scratched because its tension is increased at the portion thereof where the thermo-shrinkable film comes into contact with a guide roll, or wrinkle-shape or pimple-shaped defects (minute protrusions formed because air charged between films are not drained) can be formed on the surface of the rolled thermo-shrinkable film.

In consideration of this fact, the thermo-shrinkable film includes a lubricant, that is, particles. In other words, the thermo-shrinkable polyester film according to an embodiment of the present invention includes particles dispersed in a polyester resin matrix.

However, as described above, when particles are added to the thermo-shrinkable polyester film for lubricity purposes, the transparency of the thermo-shrinkable polyester film becomes poor, thus deteriorating the ability to see the contents included in a container by looking through the thermo-shrinkable polyester film.

Hence, the thermo-shrinkable polyester film according to an embodiment of the present invention has a haze of 1.0% or less.

Here, the haze of the thermo-shrinkable polyester film was measured based on ASTM D-1003. Seven parts were randomly extracted from two peripheral positions and one central position of the thermo-shrinkable polyester film. Subsequently, the seven parts was cut to a size of 5cm × 5cm, put into a hazemeter (NDH 300A, manufactured by Nihon Denshoku Co., Ltd.) and then irradiated with light having a wavelength of 555 nm to measure their respective haze values (%). The average value of the five haze values excluding the maximum haze value and the minimum haze value may be defined as the haze.

When the haze of the thermo-shrinkable polyester film is above 1.0%, and the thermo-shrinkable polyester film is used as a label for covering a container, it is difficult to ensure extremely good visibility of the contents of the container by looking through the thermo-shrinkable polyester film. That is, it is possible to confirm the contents of the container, but it is impossible to meet super-transparency which would allow the contents of the container to appear fresh.

Meanwhile, in order to meet the lubricity and super-transparency of the thermo-shrinkable polyester film, and in consideration of the original function of the thermo-shrinkable polyester film, the productivity thereof, and the applicability thereof to various types of containers, the thermo-shrinkable polyester film according to the present invention has a contraction ratio of 35 ~ 80% in a main contraction direction when it is treated with hot water at 90°C for 10 seconds.

Generally, in the process of covering a container with a label made of the thermo-shrinkable polyester film, in the case of a hot air tunnel, the label must be passed through hot air having a temperature of 120 ~ 200°C and a flow speed of 2 ~ 20 m/sec for 2 ~ 20 seconds, and, in the case of a steam tunnel, the label must be passed through steam having a temperature of 75 ~ 95°C and a pressure of 0.5 ~ 20 MPa for 2 ~ 20 seconds.

For this reason, when the contraction ratio, specifically the thermal contraction ratio of the thermo-shrinkable polyester film, is present in the above range under the general conditions of contraction, a label having a very beautiful contracted appearance can be obtained.

Specifically, in the case where the thermo-shrinkable polyester film is treated with hot water at 90°C for 10 seconds, when the contraction ratio of the thermo-shrinkable polyester film in a main contraction direction is below 35%, there are problems in that productivity is decreased and energy consumption is increased because it takes a lot of time to contract the thermo-shrinkable polyester film, and in that it is difficult to apply the thermo-shrinkable polyester film to various types of containers because its applicability is decreased depending on the change in the structure of the container. Conversely, when the contraction ratio thereof in a main contraction direction is above 80%, there is a problem in that the thermo-shrinkable polyester film is contracted too rapidly, so that air charged between a container and a label cannot easily leave that space, with the result that an air layer is formed between the container and the label, thereby deteriorating the appearance of a product and the degree of definition of the product.

Further, the contraction ratio of the thermo-shrinkable polyester film in a direction perpendicular to the main contraction direction is 5% or less when it is treated under the same conditions.

When the contraction ratio of the thermo-shrinkable polyester film in a direction perpendicular to the main contraction direction is above 5%, the appearance of a label is unfortunately damaged because the thermo-shrinkable polyester film is rolled at the end of the label during the process of covering a container with the label and then contracting the label applied on the container.

The thermo-shrinkable polyester film meeting the above material properties is formed using at least one selected from copolyesters obtained by polymerizing dicarboxylic acid components including one or more dicarboxylic acids, such as terephthalic acid, oxalic acid, malonic acid, succinic acid, adipic acid, suberic acid, azelaic acid, sebacic acid, phthalic acid, iso-phthalic acid, naphthalene dicarboxylic acid and diphenyl ether dicarboxylic acid, with diol components including one or more diols, such as ethylene glycol, neo-pentyl glycol, propylene glycol, trimethylene glycol, tetramethylene glycol, hexamethylene glycol, diethylene glycol, polyalkylene glycol, 1,4-cyclohexane dimethanol; or can be formed using a mixture of a homopolyester and the copolyester.

In this case, each of the copolyesters may include 80 mol% or more of terephthalic acid based on the total amount of the dicarboxylic acid components, and 14 ~ 24 mol% of diols excluding ethylene glycol based on the total amount of the diol components. Here, the diols excluding ethylene glycol serve to increase the contraction ratio of the thermo-shrinkable polyester film by decreasing the crystallinity of a polyester polymer. When the rate of the diols excluding ethylene glycol is within the above range, there may be advantages in terms of controlling the drying process, film workability, melting characteristics and material properties during the film forming process.

In the present invention, the copolyester may be prepared in the same manner as general methods of preparing polyester. For example, the copolyester may be prepared using a direct esterification method in which dicarboxylic acid is directly reacted with diols, an ester exchange method in which dimethyl ester diols of dicarboxylic acid are used, or the like.

According to an embodiment of the present invention, the copolyester has a glass transition temperature of 67~77°C and an intrinsic viscosity of 0.60 ~ 0.70 dl/g. In this case, the glass transition temperature of the copolyester can be adjusted depending on the composition of monomers used to prepare a polymer, and the intrinsic viscosity thereof can be changed depending on the degree of polymerization thereof. Therefore, in the present invention, the copolyester having the above glass transition temperature and intrinsic viscosity may be used by controlling the glass transition temperature and the intrinsic viscosity thereof.

Meanwhile, when the thermo-shrinkable polyester film is formed of two or more kinds of polyesters, that is, a polyester resin mixture, the polyester resin mixture may include 80 mol% or more of terephthalic acid based on the total amount of the dicarboxylic acid components, and 20 ~ 36 mol% of diols excluding ethylene glycol based on the total amount of the diol components.

Further, in the present invention, polybutylene terephthalate is used as homopolyester, and the thermo-shrinkable polyester film may be formed using a mixture of the polybutylene terephthalate and the copolyester. In this case, the amount of the copolyester may be 85 ~ 93 wt% based on the total amount of the polyester resin, and the amount of polybutylene terephthalate may be 7 - 15 wt% based on the total amount of the polyester resin.

When the amount of the copolyester is excessively low, the thermal contraction ratio and the contraction stress of the thermo-shrinkable polyester film is lowered, thus decreasing the adhesive force of the label to the container. Further, when the amount of the copolyester is excessively high, the contraction stress of thermo-shrinkable polyester film is increased, and thus a container can be dented by a label during the contraction process.

Generally, thermo-shrinkable polyester films are commercially used by melting them using a solvent and then attaching them to each other. In this case, when the amount of polybutylene terephthalate in the thermo-shrinkable polyester film is excessively low, the adhesivity between the thermo-shrinkable polyester films is decreased, and thus it is difficult to commercially use the thermo-shrinkable polyester films. Conversely, when the amount of polybutylene terephthalate in the thermo-shrinkable polyester film is excessively high, the contraction ratio of the thermo-shrinkable polyester film in a main contraction direction (for example, transverse direction (TD)) can be decreased, and the mechanical properties (strength elongation) of the thermo-shrinkable polyester film in a direction (for example, mechanical direction (MD)) perpendicular to the main contraction direction can be deteriorated. Generally, thermo-shrinkable polyester films are required to have excellent mechanical properties because they undergo many processes at the time of commercially using the thermo-shrinkable polyester films. Therefore, when the mechanical properties of the thermo-shrinkable polyester films are deteriorated, they can be cut or ruptured.

Meanwhile, polyethylene terephthalate may be used as the homopolyester instead of or together with polybutylene terephthalate.

As described above, the thermo-shrinkable polyester film includes a lubricant, that is, particles in consideration of lubricity. The kind of particle used is not particularly limited. Examples of the particles may include inorganic particles, organic salt particles and polymer particles. Here, the inorganic particles may include carbonate particles (alkaline earth metal carbonate particles such as calcium carbonate particles, magnesium carbonate particles, barium carbonate and the like), sulfate particles (alkaline earth metal sulfate particles such as barium sulfate particles and the like), phosphate particles (alkaline earth metal phosphate particles such as lithium phosphate particles, calcium phosphate particles, magnesium phosphate particles and the like), oxide particles (aluminum oxide particles, silicon oxide particles, titanium oxide particles, zirconium oxide particles and the like), kaolin particles, talc particles, lithium fluoride particles, and the like. Among these inorganic particles, silica (silicon oxide) particles have good treatability and can usefully be used to obtain a film having good transparency.

The organic salt particles may include oxalate particles (alkaline earth metal oxalate particles such as calcium oxalate particles and the like), terephthalate particles (alkaline earth metal terephthalate particles such as calcium terephthalate particles, magnesium terephthalate particles, barium terephthalate particles, and zinc terephthalate particles, manganese terephthalate particles, and the like), and the like.

The polymer particles may include particles of homopolymers or copolymers of vinyl monomers such as divinylbenzene, styrene, (meta)acrylic acid and the like, polytetrafluoroethylene particles, benzoguanamine resin particles, thermosetting urea resin particles, thermosetting phenol resin particles, silicon resin particles, crosslinked polystyrene particles, and the like. Among these polymer particles, crosslinked polystyrene particles are the most preferable.

These particles have an average particle size of 1 ~ 5 $\mu$m in order to be imparted with lubricity. When the average particle size of the particles is smaller than 1 $\mu$m, after the stretching of the thermo-shrinkable polyester film, it is difficult to protrude the particles from the surface thereof, so that air flowing into a thermo-shrinkable polyester film roll during the rolling process cannot leave that space to bring about the air pocket phenomenon, with the result that many protrusions are formed on the surface of the thermo-shrinkable polyester film roll, thereby deteriorating the appearance of a product. Further, when the average particle size of the particles is above 5 $\mu$m, the haze of the thermo-shrinkable polyester film is excessively increased, thus deteriorating the transparency thereof. The term "average particle size" is referred to as a nominal value of a lubricant maker, and is obtained by measuring the sizes of the particles formed by pulverizing the aggregate of primary particles.

Further, the amount of the particles for providing lubricity is 30 ~ 150 ppm, preferably 50 ~ 120 ppm, and more preferably 70 ~ 100 ppm based on the total weight of the polyester resin matrix.

When the amount of the particles for providing lubricity is below 30 ppm, the number of the particles protruding from the surface of the thermo-shrinkable polyester film after a stretching process is small, so that it is difficult to efficiently remove the air flowing in during the rolling process, with the result that a large number of protrusions are formed on the surface of the thermo-shrinkable polyester film roll. Conversely, when the amount thereof is above 150 ppm, the haze of the thermo-shrinkable polyester film is increased, thus deteriorating the transparency thereof.

The time at which the particles may be added to provide lubricity is not particularly limited. The particles may be added at the time of polymerizing a polyester resin matrix or at the time of adding polyester to an extruder.

In addition, the thermo-shrinkable polyester film according to an embodiment of the present invention may further include various additives, such as an antistatic agent, an anti-aging agent, a dye, and the like.

Meanwhile, the thermo-shrinkable polyester film according to an embodiment of the present invention includes an inline coating layer including particles having an average particle size of 80 ~ 200 nm on a surface layer thereof.

Here, the 'inline coating layer' will be understood as a layer formed by performing a coating process during a process of forming a film by extruding a polyester resin by those skilled in the art.

When the inline coating layer including particles having an average particle size of 80 ~ 200 nm is formed on the surface layer of the thermo-shrinkable polyester film, there are advantages in that a super-transparent film can be formed by further decreasing the amount of the lubricative particles dispersed in the polyester resin matrix, and in that it is possible to prevent the thermo-shrinkable polyester film from being transported at high speed or being badly treated at the time of the rolling the thermo-shrinkable polyester film, which occur when the amount of the lubricative particles is decreased.

The average particle size of the particles included in the inline coating layer is 80 ~ 200 nm, more preferably, 80 ~ 120 nm, in terms of the dispersion stability of the particles in a coating solution and the uniformity with which the coating solution is coated onto the surface of the thermo-shrinkable polyester film.

The kind of the particles included in the inline coating layer is not particularly limited, but may be the same as the examples of the lubricative particles dispersed in the above polymer resin matrix.

The amount of the particles included in the inline coating layer may be determined by the amount of the particles included in the coating solution. The amount of the particles may be 0.01 ~ 0.10 wt% based on the effective components in the coating solution for forming the inline coating layer in consideration of the haze of the thermo-shrinkable polyester film and the dispersibility of the particles in the coating solution.

Meanwhile, the inline coating layer may include an antistatic agent. In this case, there is an advantage in that static electricity caused by friction is reduced by the antistatic agent, so that it is possible to prevent films from sticking to each other during the process of rolling the films, with the result that the air flowing in during the rolling process can be easily discharged.

Examples of the antistatic agent may include, but are not particularly limited to, quaternary ammonium compounds, alkyl sulfonate compounds represented by $RSO_3Na$, alkyl sulfate compounds represented by $ROSO_3Na$, alkyl phosphate compounds, and the like. The amount of the antistatic agent may be 0.1 ~ 1.5 wt% based on the effective components in the coating solution for forming the inline coating layer in order to improve the processability and antistatic performance of the thermo-shrinkable polyester film by minimizing the amount of foreign substances formed by friction occurring during the printing, tubing and thermal contraction processes.

Further, the inline coating layer may include a binder resin in consideration of the binding force and adhesivity of the thermo-shrinkable polyester film. In this case, the binder resin is not particularly limited, and may be selected in consideration of solvent solubility during a tubing process.

Examples of the binder resin may include polyesters, acrylate-ester copolymers, polyester copolymers, and the like.

**[Mode for Invention]**

Hereinafter, the present invention will be described in more detail with reference to the following Examples. However, the scope of the present invention is not limited thereto.

The thermo-shrinkable polyester film of the present invention was evaluated by the following factors.

(1) Intrisic viscosity (I.V.)

The intrinsic viscosity of the thermo-shrinkable polyester film of the present invention was measured using a viscosity meter at 30°C afer mixing 200 mg of a sample with 20 ml of a mixed solvent of phenol and tetrachloroethane at a ratio of 50: 50 to form a mixed solution and heating the mixed solution to about 110°C for 1 hour.

(2) Glass transition temperature (Tg)

The glass transition temperature of the thermo-shrinkable polyester film of the present invention was measured using a thermometer (DSC-7, manufactured by Perking-Elmer Corp.) after heating a sample at a heating rate of 20 °C/min.

(3) Thermal contraction ratio

The thermo-shrinkable polyester film was cut to a size of 20 cm $\times$ 20 cm and then thermally contracted in hot water of 90°C $\pm$ 0.5°C under an unloaded state. Then, the length of the thermo-shrinkable polyester film in a mechanical direction (MD) and the length thereof in a transverse direction (TD) were measured, and then the thermal contraction ratio of the thermo-shrinkable polyester film was obtained by Formula 1 below.

<Formula 1>

$$thermal\ contraction\ ratio = (\frac{length\ before\ contracted - length\ after\ contracted}{length\ before\ contracted}) \times 100(\%)$$

(4) Haze

The haze of the thermo-shrinkable polyester film was measured based on ASTM D-1003. Seven parts were randomly extracted from two peripheral positions and one central position of the thermo-shrinkable polyester film. Subsequently, the seven parts was cut to a size of 5cm $\times$ 5cm, put into a hazemeter (NDH 300A, manufactured by Nihon Denshoku Co., Ltd.) and then irradiated with light having wavelength of 555 nm to measure their respective haze values (%). Subsequently, the average value of the five haze values excluding the maximum haze value and the minimum haze value was calculated, thus obtaining the haze of the thermo-shrinkable polyester film.

(5) Evaluation of contraction uniformity

The thermo-shrinkable polyester film was printed with patterns, and then its ends were attached to each other to fabricate a label. Subsequently, a container was covered with the label, and then passed through a steam tunnel to obtain a final product (a labeled container). The contraction uniformity of the thermo-shrinkable polyester film was evaluated by measuring the number of the labels having defective appearance and the number of the labels warped by the printing.

In this case, the steam tunnel has a length of 1.5 m, and is provided therein with steam injection pipes having a length of 1.2 m two by two vertically and horizontally. Steam was injected at a pressure of 0.2 bar. Further, the steam tunnel is provided with temperature controllers and heaters in order to control the steam temperatures of the inlet and outlet of the steam tunnel. The steam temperature of the inlet of the steam tunnel was set at 77°C, and the steam temperature of the outlet thereof was set at 86°C. The container covered with the labels stayed in the steam tunnel for 5 seconds to contract the labels. The contraction uniformity of the thermo-shrinkable polyester film was obatined by measuring the number of the labels having defective appearance and the number of the labels warped by the printing.

The ratio of the number of normal products based on 1000 samples was defined as contraction uniformity, and the contraction uniformity is calculated by Formula 2 below.

<Formula 2>

$$contraction\ uniformity = (\frac{1000 - number\ of\ defective\ products}{1000}) \times 100(\%)$$

(6) Anti-blocking capability (blocking between films)

The inline-coated surface and non-coated surface of the thermo-shrinkable polyester film were brought into contact with each other using a heat gradient tester (HG-100-2, manufactured by Toyoseiki Corp.). Subsequently, printing paper of A-4 size (thickness corresponding to 90 ~ 110 g/m$^2$) was applied on both outsides of the thermo-shrinkable polyester film such that metal seals for heating are not adhered to the film, and then the film laminated with the printing paper was put into five metal seals having different temperatures and then left for 12 hours with it pressed. Then, it was observed whether the pressed coated surface and non-coated surface of the film were blocked.

In this case, the temperature of the metal seal was set at 60°, the pressure of the metal seal coming into contact with the film was set at 3 kg$_f$/cm$^2$, and the film was left for 12 hours, and the metal seal was separated from the film, and then whether blocking occurs was observed.

Whether blocking occurs was determined based on the following standards. The case that the pressed part of film by metal seal is adhered to each other is indicated by "X ", the case that pressed part of film by metal seal is not adhered to each other but its color become hazy is indicated by "Δ", and the case that pressed part of film by metal seal is not changed and easily separated each other is indicated by "O".

(7) Protrusion frequency in film

Samples having a size of 1m× 1m were selected from two peripheral positions and one central position of a film roll based on jumbo-roll or mill-roll, and the number of protrusions having a diameter of 200 μm or larger formed in the respective samples was measured.

The number of protrusions was measured as follows.

The sites, in which protrusions are formed, were observed with the naked eye, and then indicated by an oil pen which is not easily erased. Subsequently, the sites indicated by the oil pen were extracted from the film roll, and then the lengths thereof were measured using an optical microscope including an eye lens provided with graduations. The size of protrusions is defined as the longest distance between the sites.

For example, in the case of circular protrusions, their diameters are equal in all directions, but, in the case of elliptic protrusions, their diameters are determined base on their long axes because their diameters can be changed depending on their short axes and long axes.

The sizes of the protrusions were measured in this way, and then the number of the protrusions having a size of 200 μm or larger was measured.

(8) Printing uniformity

The printing uniformity of the thermo-shrinkable polyester film was evaluated by printing film rolls having a width of 560 mm and a length of 2000 m with patterns and then measuring the number of defectively-printed part at the 2000m film rolls due to the formation of protrusions.

The printing of the film rolls was conducted using a gravure printer. The film rolls were printed with six colors of red, blue, yellow, green, black and white, and the number of defectively-printed part at the film rolls due to the formation of protrusions was measured based on circular and elliptical shaped printing dot formed by the ununiform adherence of ink with the naked-eye. The defective printing frequency is the number of defectively-printed parts per 2000 m, and is obtained by Formula 3 below

<Formula 3>

$$\text{Defective printing frequency (ea/2000m)} = \text{number of defectively-printed parts} / 2000(m)$$

<Example 1>

A copolyester (COPET) having an intrinsic viscosity of 0.67 dℓ/g and a glass transition temperature of 76°C was prepared by condensing and polymerizing 100 mol% of terephthalic acid as a dibasic acid component with 100 mol% of ethylene glycol and 24 mol% of neo-pentyl glycol as glycol components using 0.05 mol of antimony trioxide as a catalyst and 50 ppm of silica (silicon dioxide) powder having an average particle size of 2.7 μm through direct esterification.

Further, a polybutylene terephthalate (PBT) resin having an intrinsic viscosity of 0.97 dℓ/g and a glass transition temperature of 30°C was prepared by polymerizing 100 mol% of terephthalic acid with 100 mol% of 1-4-butanediol using 0.015 parts by weight of tetrabutyl titanate as a catalyst.

Subsequently, 90 wt% of the copolyester (COPET) was blended with 10 wt% of the polybutylene terephthalate (PBT) resin, and then the blend of the copolyester (COPET) and the polybutylene terephthalate (PBT) resin was extruded at 280°C, rapidly cooled and then solidified to obtain an unstretched film.

The unstretched film passed through rollers moving in a mechanical direction (MD), underwent an inline coating (ILC) process, was preheated at a temperature of 85°C, was stretched four times in a transverse direction (TD), and was then heat-treated at room temperature to obtain a film.

In this case, the inline coating (ILC) process was conducted using a coating solution including 0.01 wt% of silica particles having an average particle size of 80 nm, 0.4 wt% of an acrylate-polyester copolymer resin and 0.1 wt% of an alkyl phosphate-based antistatic agent.

The obtained film is a thermo-shrinkable polyester film having a thickness of 50 $\mu$m, and the material properties thereof are given in Table 3 below.

<Examples 2 to 8>

Thermo-shrinkable polyester films were formed in the same manner as Example 1, except that the kind, size and amount of the particles used to prepare the copolyester (COPET); the intrinsic viscosity and glass transition temperature of the copolyester (COPET); the blending ratio of the copolyester (COPET) and the polybutylene terephthalate (PBT); the size and amount of the particles used in the inline coating (ILC) process; the amount of the antistatic agent; the stretching conditions of the unstretched film in the mechanical direction (MD); and the stretching conditions of the unstretched film in the transverse direction (TD) were changed as shown in Table 1 below. The material properties of the obtained thermo-shrinkable polyester films are given Table 3 below.

<Reference Example 1>

A thermo-shrinkable polyester film was formed in the same manner as Example 1, except that the thermo-shrinkable polyester film was formed without performing the inline coating (ILC) process. The material properties of the obtained thermo-shrinkable polyester film are given Table 3 below.

<Reference Examples 2 to 9>

Thermo-shrinkable polyester films were formed in the same manner as Example 1, except that the kind, size and amount of the particles used to prepare the copolyester (COPET); the intrinsic viscosity and glass transition temperature of the copolyester (COPET); the blending ratio of the copolyester (COPET) and the polybutylene terephthalate (PBT); the size and amount of the particles used in the inline coating (ILC) process; the amount of the antistatic agent; the stretching conditions of the unstretched film in the mechanical direction (MD); and the stretching conditions of the unstretched film in the transverse direction (TD) were changed as shown in Table 2 below. The material properties of the obtained thermo-shrinkable polyester films are given Table 3 below.

[Table 1]

| Class. | | Ex.1 | Ex.2 | Ex.3 | Ex.4 | Ex.5 | Ex.6 | Ex.7 | Ex.8 |
|---|---|---|---|---|---|---|---|---|---|
| COPET | ethyleneglycol content (mol%) | 100 | 100 | 100 | 100 | 107 | 105 | 100 | 100 |
| | neo-pentylglycol content (mol%) | 24 | 24 | 24 | 24 | 17 | 19 | 24 | 24 |
| | kind of particle | silica | silica | silica | silica | silica | silica | barium sulfate | barium sulfate |
| | average particle size ($\mu$m) | 2.7 | 2.7 | 1.2 | 4.5 | 2.7 | 2.7 | 1.2 | 1.2 |
| | particle content (ppm) | 50 | 100 | 150 | 35 | 80 | 80 | 100 | 150 |
| | intrinsic viscosity (dl/g) | 0.67 | 0.66 | 0.67 | 0.67 | 0.70 | 0.62 | 0.65 | 0.65 |
| | glass transition temperature (°C) | 76 | 75 | 76 | 75 | 76 | 70 | 75 | 75 |
| | blending ratio (wt%) | 90 | 86 | 93 | 93 | 90 | 85 | 90 | 85 |
| PBT | blending ratio (wt%) | 10 | 14 | 7 | 7 | 10 | 15 | 10 | 15 |
| particle content based on the total amount of polymer resin matrix (ppm) | | 45 | 86 | 139.5 | 32.6 | 72 | 68 | 90 | 127.5 |
| MD stretching | elongation percentage (%; original elongation + additional elongation) | - | 0.1 | 0.5 | 3.0 | 4.5 | - | 0.1 | 0.1 |

(continued)

| | Class. | Ex.1 | Ex.2 | Ex.3 | Ex.4 | Ex.5 | Ex.6 | Ex.7 | Ex.8 |
|---|---|---|---|---|---|---|---|---|---|
| ILC | treated or non-treated | ○ | ○ | ○ | ○ | ○ | ○ | ○ | ○ |
| | kind of particle | silica | silica | silica | silica | silica | silica | silica | silica |
| | average particle size (nm) | 80 | 120 | 80 | 200 | 80 | 80 | 120 | 80 |
| | particle content (based on coating solution, wt%) | 0.01 | 0.03 | 0.01 | 0.09 | 0.01 | 0.01 | 0.01 | 0.05 |
| | binder content (based on coating solution, wt%) | 0.4 | 0.4 | 0.4 | 0.6 | 0.4 | 0.4 | 0.4 | 0.4 |
| | antistatic agent content (based on coating solution, wt%) | 0.1 | 0.3 | 0.5 | 1.2 | 0.2 | 0.2 | 0.2 | 0.5 |
| TD stretching | preheating temperature (°C) | 85 | 88 | 91 | 92 | 95 | 82 | 88 | 90 |
| | stretching temperature (°C) | 75 | 70 | 84 | 92 | 92 | 70 | 70 | 81 |
| | elongation ratio (times) | 4.0 | 4.2 | 4.0 | 4.0 | 4.5 | 3.7 | 4.2 | 4.2 |
| | heat treating temperature (°C) | room temp. | room temp. | 83 | 93 | 93 | room temp. | 60 | 83 |

[Table 2]

| Class. | | Ref.1 | Ref.2 | Ref.3 | Ref.4 | Ref.5 | Ref.6 | Ref.7 | Ref.8 | Ref.9 |
|---|---|---|---|---|---|---|---|---|---|---|
| COPET | ethyleneglycol content (mol%) | 100 | 100 | 100 | 100 | 100 | 100 | 100 | 100 | 100 |
| | neo-pentylglycol content (mol%) | 24 | 24 | 24 | 24 | 24 | 24 | 24 | 24 | 24 |
| | kind of particle | silica | silica | silica | silica | silica | silica | silica | silica | silica |
| | average particle size ($\mu$m) | 2.7 | 2.7 | 2.7 | 2.7 | 2.7 | 2.7 | 2.7 | 0.8 | 5.5 |
| | particle content (ppm) | 50 | 50 | 50 | 100 | 100 | 30 | 170 | 100 | 100 |
| | intrinsic viscosity (dl/g) | 0.67 | 0.67 | 0.67 | 0.67 | 0.67 | 0.66 | 0.66 | 0.66 | 0.67 |
| | glass transition temperature (°C) | 76 | 76 | 76 | 76 | 76 | 75 | 75 | 75 | 76 |
| | blending ratio (wt%) | 90 | 90 | 90 | 90 | 90 | 90 | 90 | 90 | 90 |
| PBT | blending ratio (wt%) | 10 | 10 | 10 | 10 | 10 | 10 | 10 | 10 | 10 |
| particle content based on the total amount of polymer resin matrix (ppm) | | 45 | 45 | 45 | 90 | 90 | 27 | 153 | 90 | 90 |
| MD stretching | elongation percentage (%; original elongation + additional elongation) | - | - | - | 0.1 | 0.1 | - | - | - | - |
| ILC | treated or non-treated | × | ○ | ○ | ○ | ○ | ○ | ○ | ○ | ○ |
| | kind of particle | - | silica | silica | silica | silica | silica | silica | silica | silica |
| | average particle size (nm) | - | 60 | 250 | 200 | 80 | 120 | 120 | 120 | 80 |
| | particle content (based on coating solution, wt%) | - | 0.10 | 0.03 | 0.008 | 0.12 | 0.03 | 0.03 | 0.03 | 0.01 |
| | binder content (based on coating solution, wt%) | - | 0.4 | 0.4 | 0.4 | 0.6 | 0.4 | 0.4 | 0.4 | 0.4 |
| | antistatic agent content (based on coating solution, wt%) | - | 0.2 | 0.2 | 0.1 | 0.2 | 0.3 | 0.3 | 0.3 | 0.5 |
| TD stretching | preheating temperature (°C) | 85 | 102 | 80 | 88 | 88 | 88 | 88 | 88 | 91 |
| | stretching temperature (°C) | 75 | 96 | 68 | 82 | 82 | 70 | 70 | 70 | 84 |
| | elongation ratio (times) | 4.0 | 4.0 | 4.3 | 4.0 | 4.0 | 4.2 | 4.2 | 4.2 | 4.0 |
| | heat treating temperature (°C) | room temp. | 96 | room temp. | 83 | 83 | room temp. | room temp. | room temp. | 83 |

EP 2 449 009 B1

11

[Table 3]

| | Thermal contraction ratio (%) | | Haze (%) | Contraction uniformity (%) | Anti-blocking capability | Protrusion frequency (ea) | Defective printing frequency (ea/2000m) |
|---|---|---|---|---|---|---|---|
| | MD | TD | | | | | |
| Ex. 1 | 2.8 | 70.2 | 0.4 | 99.7 | ○ | 0 | 0 |
| Ex. 2 | 2.5 | 77.1 | 0.7 | 99.8 | ○ | 0 | 0 |
| Ex. 3 | 3.3 | 64.2 | 0.6 | 99.5 | ○ | 0 | 0 |
| Ex. 4 | 3.5 | 40.5 | 0.5 | 98.9 | ○ | 0 | 0 |
| Ex. 5 | 4.3 | 45.4 | 0.6 | 99.0 | ○ | 0 | 0 |
| Ex. 6 | 3.0 | 47.5 | 0.6 | 99.1 | ○ | 0 | 0 |
| Ex. 7 | 2.1 | 74.7 | 0.4 | 99.4 | ○ | 0 | 0 |
| Ex. 8 | 3.2 | 63.3 | 0.7 | 99.1 | ○ | 0 | 0 |
| Ref. 1 | 2.7 | 68.5 | 0.4 | 99.3 | × | 78 | 103 |
| Ref. 2 | 1.2 | 34.2 | 0.4 | 57.2 | Δ | 53 | 74 |
| Ref. 3 | 1.2 | 80.5 | 1.2 | 60.3 | ○ | 0 | 2 |
| Ref. 4 | 3.2 | 63.3 | 0.9 | 98.9 | Δ | 8 | 16 |
| Ref. 5 | 3.0 | 61.7 | 1.6 | 99.0 | ○ | 0 | 0 |
| Ref. 6 | 2.5 | 75.8 | 0.3 | 99.3 | Δ | 48 | 84 |
| Ref. 7 | 2.0 | 76.1 | 1.4 | 99.2 | ○ | 0 | 0 |
| Ref. 8 | 1.9 | 76.7 | 0.6 | 99.3 | Δ | 28 | 34 |
| Ref. 9 | 3.2 | 61.8 | 1.5 | 98.8 | ○ | 0 | 3 |

It can be seen from Table 3 that the thermo-shrinkable polyester films formed in Examples 1 to 8 have a haze of 1% or less, and thus exhibit high definition and excellent contraction uniformity, anti-blocking capability and printing uniformity.

In contrast, it can be seen from Reference Example 1 that that its anti-blocking capability is deteriorated because an inline coating process was not performed, and its defective printing frequency is increased because a large number of protrusions are formed thereon, thus increasing a defective fraction at the time of forming this thermo-shrinkable polyester film into a labeled container.

Further, it can be seen from Reference Examples 2 and 3 that, when the size of the particles used in inline coating is excessively small or large, a large number of protrusions are formed, so that the defective fraction of labeled containers is increased or high-transparency film having high definition cannot be obtained due to its high haze.

Further, it can be seen from Reference Examples 4 and 5 that, when the amount of the particles used in inline coating is excessively low or high, a large number of protrusions are formed the same as in Reference Examples 2 and 3, so that the defective fraction of labeled containers is increased or high-transparency film having high definition cannot be obtained due to its high haze.

Further, it can be seen from Reference Examples 6 and 7 that, when the amount of the particles included in the polymer matrix is excessively low or high, a large number of protrusions are formed the same as in Reference Examples 2 and 3, so that the defective fraction of labeled containers is increased or high-transparency film having high definition cannot be obtained due to its high haze.

Further, it can be seen from Reference Examples 8 and 9 that, when the size of the particles included in the polymer matrix is excessively small or large, a large number of protrusions are formed the same as in Reference Examples 2 and 3, so that the defective fraction of labeled containers is increased or high-transparency film having high definition cannot be obtained due to its high haze.

Meanwhile, it can be seen from Reference Examples 2 and 3 that, when the contraction ratio of the thermo-shrinkable polyester film is excessively low or high, the contraction uniformity thereof is deteriorated, thus decreasing the productivity of a product.

**Claims**

1. A thermo-shrinkable polyester film, comprising:

   particles dispersed in a polyester resin matrix,
   wherein the thermo-shrinkable polyester film has a haze of 1.0% or less;
   a contraction ratio of the thermo-shrinkable polyester film in a main contraction direction is 35 - 80% when it is treated with hot water at 90°C for 10 seconds;
   a contraction ratio of the thermo-shrinkable polyester film in a direction perpendicular to the main contraction direction is 5% or less when it is treated with hot water at 90°C for 10 seconds; and
   a number of protrusions having a size of 200 $\mu$m or larger distributed in a sample having an area of 1 m x 1 m is 0;
   wherein the haze is measured based on ASTM D-1003, seven parts being randomly extracted from two peripheral positions and one central position of the thermo-shrinkable polyester film, and thereafter being cut to a size of 5 cm x 5 cm, put into a hazemeter and then irradiated with light having a wavelength of 555 nm to measure their respective haze values (%), and the average value of the five haze values excluding the maximum haze value and the minimum haze value being defined as the haze,
   wherein the particles dispersed in the polyester resin matrix has an average particle size of 1 - 5 $\mu$m,
   wherein the particles are included in an amount of 30- 150 ppm based on the total weight of the polyester resin matrix,
   wherein the thermo-shrinkable polyester film comprises an inline coating layer including particles having an average particle size of 80 - 200 nm on a surface layer thereof,
   wherein the polyester resin matrix includes at least one selected from copolyesters obtained by polymerizing dicarboxylic acid components including one or more dicarboxylic acids, such as terephthalic acid, oxalic acid, malonic acid, succinic acid, adipic acid, suberic acid, azelaic acid, sebacic acid, phthalic acid, iso-phthalic acid, naphthalene dicarboxylic acid and diphenyl ether dicarboxylic acid, with diol components including one or more diols, such as ethylene glycol, neo-pentyl glycol, propylene glycol, trimethylene glycol, tetramethylene glycol, hexamethylene glycol, diethylene glycol, polyalkylene glycol, 1,4-cyclohexane dimethanol; or a mixture of a homopolyester and the copolyester.

2. The thermo-shrinkable polyester film according to claim 1,
   wherein the particles include at least one selected from calcium carbonate particles, magnesium carbonate particles, barium carbonate particles, barium sulfate particles, lithium phosphate particles, calcium phosphate particles, magnesium phosphate particles, aluminum oxide particles, silicon oxide particles, titanium oxide particles, zirconium oxide particles, kaolin particles, talc particles, lithium fluoride particles, oxalic alkaline earth metal salt particles, alkaline earth metal salt particles, zinc salt particles, manganese salt particles, particles of homopolymers or copolymers of vinyl monomers such as divinylbenzene, styrene, (meth)acrylic acid and the like, polytetrafluoroethylene particles, benzoguanamine resin particles, thermosetting urea resin particles, thermosetting phenol resin particles, silicon resin particles, and crosslinked polystyrene particles.

3. The thermo-shrinkable polyester film according to claim 1 or 2, wherein the inline coating layer is formed using a coating solution including 0.01 - 0.10 wt% of particles.

4. The thermo-shrinkable polyester film according to any one of claims 1 to 3, wherein the inline coating layer includes a binder resin.

5. The thermo-shrinkable polyester film according to any one of claims 1 to 4, wherein the inline coating layer includes an antistatic agent.

6. The thermo-shrinkable polyester film according to any one of claims 1 to 5, wherein the copolyester includes 80 mol% or more of terephthalic acid based on the total amount of the dicarboxylic acid components, and 14- 24 mol% of diols excluding ethylene glycol based on the total amount of the diol components.

7. The thermo-shrinkable polyester film according to any one of claims 1 to 6, wherein the mixture of homopolyester and copolyester includes 80 mol% or more of terephthalic acid based on the total amount of the dicarboxylic acid components, and 20- 36 mol% of diols excluding ethylene glycol based on the total amount of the diol components.

8. The thermo-shrinkable polyester film according to any one of claims 1 to 7, wherein the copolyester has a glass transition temperature of 67 - 77°C and an intrinsic viscosity of 0.60-0.70 dl/g.

9. The thermo-shrinkable polyester film according to any one of claims 1 to 8, wherein the homopolyester is polybutylene terephthalate or polyethylene terephthalate.

10. The thermo-shrinkable polyester film according to any one of claims 1 to 9, wherein the copolyester is included in an amount of 85 - 93 wt% based on the total amount of the polyester resin matrix.


**Patentansprüche**

1. Wärmeschrumpffähige Polyesterfolie, umfassend:

   Teilchen, dispergiert in einer Polyesterharzmatrix,
   wobei die wärmeschrumpffähige Polyesterfolie eine Trübung von 1,0% oder weniger besitzt;
   ein Kontraktionsverhältnis der wärmeschrumpffähigen Polyesterfolie in einer Hauptkontraktionsrichtung beträgt 35-80%, wenn sie mit heißem Wasser bei 90°C während 10 Sekunden behandelt wird;
   ein Kontraktionsverhältnis der wärmeschrumpffähigen Polyesterfolie in einer Richtung, senkrecht zu der Hauptkontraktionsrichtung, beträgt 5% oder weniger, wenn sie mit heißem Wasser bei 90°C während 10 Sekunden behandelt wird; und
   eine Anzahl an Protrusionen mit einer Größe von 200 $\mu$m oder größer, verteilt in einer Probe mit einer Fläche von 1 m x 1 m beträgt 0;
   wobei die Trübung gemessen wird basierend auf ASTM D-1003, wobei sieben Teile willkürlich von zwei peripheren Positionen und einer zentralen Position der wärmeschrumpffähigen Polyesterfolie extrahiert werden und danach auf eine Größe von 5 cm x 5 cm geschnitten werden, in ein Trübungsmessgerät gebracht und dann mit Licht einer Wellenlänge von 555 nm bestrahlt werden, um deren jeweilige Trübungswerte (%) zu messen, und der Durchschnittswert der fünf Trübungswerte, ausschließlich des maximalen Trübungswertes und des minimalen Trübungswertes, als die Trübung definiert werden,
   wobei die in der Polyesterharzmatrix dispergierten Teilchen eine durchschnittliche Teilchengröße von 1-5 $\mu$m besitzen,
   wobei die Teilchen in einer Menge von 30-150 ppm, bezogen auf das Gesamtgewicht der Polyesterharzmatrix, beinhaltet sind,
   wobei die wärmeschrumpffähige Polyesterfolie auf einer Oberflächenschicht hiervon eine Inline-Überzugsschicht umfasst, beinhaltend Teilchen mit einer durchschnittlichen Teilchengröße von 80-200 nm,
   wobei die Polyesterharzmatrix mindestens eine umfasst, gewählt aus Copolyestern, erhalten durch Polymerisieren von Dicarbonsäurekomponenten, einschließlich einer oder mehrerer Dicarbonsäuren, wie Terephthalsäure, Oxalsäure, Malonsäure, Bernsteinsäure, Adipinsäure, Suberinsäure, Azelainsäure, Sebacinsäure, Phthalsäure, Isophthalsäure, Naphthalindicarbonsäure und Diphenylether-Dicarbonsäure, mit Diolkomponenten, einschließlich einem oder mehreren Diolen, wie Ethylenglykol, Neopenthylglykol, Propylenglykol, Trimethylenglykol, Tetramethylenglykol, Hexamethylenglykol, Diethylenglykol, Polyalkylenglykol, 1,4-Cyclohexandimethanol; oder eine Mischung aus einem Homopolyester und dem Copolyester.

2. Wärmeschrumpffähige Polyesterfolie nach Anspruch 1, wobei die Teilchen mindestens eines beinhalten, gewählt aus Calciumcarbonatteilchen, Magnesiumcarbonatteilchen, Bariumcarbonatteilchen, Bariumsulfatteilchen, Lithiumphosphatteilchen, Calciumphosphatteilchen, Magnesiumphosphatteilchen, Aluminiumoxidteilchen, Siliciumoxidteilchen, Titanoxidteilchen, Zirkoniumoxidteilchen, Kaolinteilchen, Talkteilchen, Lithiumfluoridteilchen, Oxalsäure-Erdalkalimetallsalzteilchen, Erdalkalimetallsalzteilchen, Zinksalzteilchen, Mangansalzteilchen, Teilchen von Homopolymeren oder Copolymeren von Vinylmonomeren, wie Divinylbenzol, Styrol, (Meth)Acrylsäure und dergleichen, Polytetrafluorethylenteilchen, Benzoguanaminharzteilchen, wärmehärtenden Harnstoffharzteilchen, wärmehärtenden Phenolharzteilchen, Siliconharzteilchen und vernetzten Polystyrolteilchen.

**3.** Wärmeschrumpffähige Polyesterfolie nach Anspruch 1 oder 2, wobei die Inline-Überzugsschicht gebildet wird unter Verwendung einer Beschichtungslösung, enthaltend 0,01-0,10 Gew.-% Teilchen.

**4.** Wärmeschrumpffähige Polyesterfolie nach mindestens einem der Ansprüche 1 bis 3, wobei die Inline-Überzugsschicht ein Bindemittelharz beinhaltet.

**5.** Wärmeschrumpffähige Polyesterfolie nach mindestens einem der Ansprüche 1 bis 4, wobei die Inline-Überzugsschicht ein antistatisches Mittel beinhaltet.

**6.** Wärmeschrumpffähige Polyesterfolie nach mindestens einem der Ansprüche 1 bis 5, wobei der Copolyester 80 Mol-% oder mehr Terephthalsäure, bezogen auf die Gesamtmenge der Dicarbonsäurekomponenten, und 14-24 Mol-% Diole, ausschließlich Ethylenglykol, bezogen auf die Gesamtmenge der Diolkomponenten, beinhaltet.

**7.** Wärmeschrumpffähige Polyesterfolie nach mindestens einem der Ansprüche 1 bis 6, wobei die Mischung aus Homopolyester und Copolyester 80 Mol-% oder mehr Terephthalsäure, bezogen auf die Gesamtmenge der Dicarbonsäurekomponenten, und 20-36 Mol-% Diole, ausschließlich Ethylenglykol, bezogen auf die Gesamtmenge der Diolkomponenten, beinhaltet.

**8.** Wärmeschrumpffähige Polyesterfolie nach mindestens einem der Ansprüche 1 bis 7, wobei der Copolyester eine Glasübergangstemperatur von 67-77°C und eine Strukturviskosität von 0,60-0,70 dl/g aufweist.

**9.** Wärmeschrumpffähige Polyesterfolie nach mindestens einem der Ansprüche 1 bis 8, wobei der Homopolyester Polybutylenterephthalat oder Polyethylenterephthalat ist.

**10.** Wärmeschrumpffähige Polyesterfolie nach mindestens einem der Ansprüche 1 bis 9, wobei der Copolyester in einer Menge von 85-93 Gew.-%, bezogen auf die Gesamtmenge der Polyesterharzmatrix, beinhaltet ist.

**Revendications**

**1.** Un film de polyester thermorétractable, comprenant:

des particules dispersés dans une matrice de résine de polyester,
dans lequel le film de polyester thermorétractable a une valeur haze de 1,0 % ou moins;
un coefficient de contraction du film de polyester thermorétractable dans un sens de contraction principal est égal à 35 - 80 % lorsqu'il est traité avec de l'eau chaude à 90°C pour 10 secondes;
un coefficient de contraction du film de polyester thermorétractable dans un sens perpendiculaire au sens de contraction principal est égal à 5 % ou moins lorsqu'il est traité avec de l'eau chaude à 90°C pour 10 secondes; et
un nombre de protrusions ayant une ampleur de 200 $\mu$m ou supérieur distribué dans un échantillon ayant un espace de 1 m x 1 m est égal à 0;
dans lequel la valeur haze est mesurée selon ASTM D-1003, sept pièces étant extraites aléatoirement de deux positions périphériques et d'une position centrale du film de polyester thermorétractable, et étant ensuite coupées à une taille de 5 cm x 5 cm, placées dans un instrument de mesure de valeurs haze et puis irradiées avec de la lumière ayant une longueur d'onde de 555 nm afin de mesurer leurs valeurs haze (%) respectives, et la valeur moyenne des cinq valeurs haze, excluant les valeurs haze maximales et les valeurs haze minimales, étant définie comme la valeur haze,
dans lequel
les particules dispersées dans la matrice de résine de polyester ont une dimension moyenne de particule de 1 - 5 $\mu$m,
dans lequel les particules sont présentes en une proportion de 30 - 150 ppm sur la base du poids total de la matrice de résine de polyester,
dans lequel le film de polyester thermorétractable comprend une couche de revêtement en ligne comprenant des particules ayant une dimension moyenne de particule de 80 - 200 nm sur une couche de surface de celui-ci,
dans lequel la matrice de résine de polyester comprend au moins un choisi parmi les copolyesters obtenus par la polymérisation de composants d'acide dicarboxylique comprenant un ou plusieurs acides dicarboxyliques, tels que l'acide téréphtalique, l'acide oxalique, l'acide malonique, l'acide succinique, l'acide adipique, l'acide subérique, l'acide azélaïque, l'acide sébacique, l'acide phtalique, l'acide iso-phtalique, l'acide naphtalène dicarboxylique et l'acide dicarboxylique d'éther diphénylique, avec des composants diol comprenant un ou plusieurs diols, tels que l'éthylène glycol, le néo-pentyl glycol, le propylène glycol, le triméthylène glycol, le tetraméthylène glycol, l'hexaméthylène glycol, le diéthylène glycol, le polyalkylène glycol, le 1,4-cyclohexane diméthanol; ou un mélange d'un homopolyester et du copolyester.

2. Le film de polyester thermorétractable selon la revendication 1,
dans lequel les particules comprennent au moins une choisie parmi les particules de carbonate de calcium, les particules de carbonate de magnésium, les particules de carbonate de baryum, les particules de sulfate de baryum, les particules de phosphate de lithium, les particules de phosphate de calcium, les particules de phosphate de magnésium, les particules d'oxyde d'aluminium, les particules d'oxyde de silicium, les particules d'oxyde de titane, les particules d'oxyde de zirconium, les particules de kaolin, les particules de talc, les particules de fluorure de lithium, les particules de sel oxalique de métal alcalino-terreux, les particules de sel de métal alcalino-terreux, les particules de sel de zinc, les particules de sel de manganèse, les particules d'homopolymères ou de copolymères de monomères vinyliques tels que le divinylbenzène, le styrène, l'acide (méth)acrylique et semblables, les particules de polytetrafluoroethylène, les particules de résine de benzoguanamine, les particules de résine urée thermodurcissables, les particules de résine de phénol thermodurcissables, les particules de résine de silicium, et les particules de polystyrène réticulé.

3. Le film de polyester thermorétractable selon la revendication 1 ou 2,
dans lequel la couche de revêtement en ligne est formée en utilisant une solution de revêtement comprenant 0,01 - 0,10 % en poids de particules.

4. Le film de polyester thermorétractable selon l'une quelconque des revendications 1 à 3, dans lequel la couche de revêtement en ligne comprend une résine liante.

5. Le film de polyester thermorétractable selon l'une quelconque des revendications 1 à 4, dans lequel la couche de revêtement en ligne comprend an agent antistatique.

6. Le film de polyester thermorétractable selon l'une quelconque des revendications 1 à 5, dans lequel le copolyester comprend 80 % en moles ou plus d'acide téréphtalique sur la base de la quantité totale des composants d'acide dicarboxylique, et 14 - 24 % en moles de diols, excluant l'éthylène glycol, sur la base de la quantité totale des composants de diol.

7. Le film de polyester thermorétractable selon l'une quelconque des revendications 1 à 6, dans lequel le mélange d'homopolyester et de copolyester comprend 80 % en moles ou plus d'acide téréphtalique sur la base de la quantité totale des composants d'acide dicarboxylique, et 20 - 36 % en moles de diols, excluant l'éthylène glycol, sur la base de la quantité totale des composants de diol.

8. Le film de polyester thermorétractable selon l'une quelconque des revendications 1 à 7, dans lequel le copolyester a une température de transition vitreuse de 67-77 °C et une viscosité intrinsèque de 0,60 - 0,70 dl/g.

9. Le film de polyester thermorétractable selon l'une quelconque des revendications 1 à 8, dans lequel l'homopolyester est le poly(téréphtalate de butylène) ou le poly(téréphtalate d'éthylène).

10. Le film de polyester thermorétractable selon l'une quelconque des revendications 1 à 9, dans lequel le copolyester est compris en une quantité de 85 - 93 % en poids sur la base de la quantité totale de la matrice de résine de polyester.